# EUROPEAN PATENT APPLICATION

(11) **EP 3 001 296 A1**
(43) Date of publication of application: **30.03.2016**
(21) Application number: 15187155.5
(22) Date of filing: 28.09.2015
(51) Int. Cl.: G06F 3/0482, G06F 3/0485, G06F 3/0488

(54) **METHOD, DEVICE, AND COMPUTER PROGRAMM FOR GENERATING AN INVERSE SLIDING MENU FOR GRAPHICAL USER INTERFACES**

(30) Priority: 29.09.2014 US 201462056955 P
(71) Applicant: Silent Circle, LLC, 1218 Le Grand-Saconnex (CH)
(72) Inventor: Silva Lins dos Santos, Fernando Lucas, São Paulo 05409-011 (BR)
(74) Representative: WSL Patentanwälte Partnerschaft mbB

(57) **Abstract**

A method for displaying a menu on an electronic device, the method including the steps of generating a menu icon in the graphical user interface, receiving first touch information indicating that a first location associated with a surface area of the menu icon has been touched on the display, displaying a menu that is associated with the menu icon to show a plurality of menu items in the graphical user interface after receiving the first touch information, the menu being displayed at a first screen position, receiving second touch information that is different from the first touch information, the second touch information indicating that a second location has been touched on the display by a finger movement away from the first location, moving the menu in a direction that is inverse to a direction that points from the first touch position to the second touch position to reposition the menu at a second screen position, determining whether one menu item of the plurality of menu items lies at the first location, and highlighting the one menu item from the plurality of menu items based on a result of said determining.

## Description

### FIELD OF THE INVENTION

The present invention relates to a method, system, device, and computer program to generate an inverse sliding menu for a graphical user interface that allows a user to access a menu via an icon and to select a function associated with a menu item in a single finger move.

### BACKGROUND OF THE INVENTION

Various types of display methods are currently being used for touch screens of electronic devices that allow a user to select a function via a menu that can be displayed. Typically, a user needs to select and press an icon on a graphical user interface of the electronic device, and upon pressing the icon, a menu with various functions is displayed. Thereafter, the user has to release from pressing the touch screen, and needs to select one of the functions from different menu items on the screen. However, this way of selecting a function can be time consuming and burdensome, as the touch screen has to be pressed and released multiple times. Also, depending on the quantity of menu items available, the menu has to be scrolled so that different menu items will be in a viewable position, so that they can be selected, and the scrolling may require further touching and releasing of various touch positions on the touch screen. Therefore, despite the existence of menus that are operable on a touch screen of electronic devices, there is a need for methods that generate improved menus for selecting functions on a touch screen.

### SUMMARY OF THE INVENTION

According to one aspect of the present invention, an electronic device having a touch-sensitive display for displaying a graphical user interface and a hardware processor is provided, the hardware processor preferably configured to generate a menu icon in the graphical user interface on the display, receive first touch information indicating that a first location associated with a surface area of the menu icon has been touched on the display, and display a menu that is associated with the menu icon to show a plurality of menu items in the graphical user interface after receiving the first touch information, the menu being displayed at a first screen position.

Moreover, the hardware processor is further preferably configured to receive second touch information that is different from the first touch information, the second touch information indicating that a second location has been touched on the display by a finger movement away from the first location, move the menu in a direction that is inverse to a direction that points from the first touch position to the second touch position to reposition the menu at a second screen position, determine whether one menu item of the plurality of menu items lies at the first location, and highlight the one menu item from the plurality of menu items based on a result of said determining.

According to another aspect of the present invention, a method for displaying a menu performed on an electronic device having a touch-sensitive display for displaying a graphical user interface and a hardware processor is provided, the method preferably including the steps of generating a menu icon in the graphical user interface on the display, receiving first touch information indicating that a first location associated with a surface area of the menu icon has been touched on the display, and displaying a menu that is associated with the menu icon to show a plurality of menu items in the graphical user interface after receiving the first touch information, the menu being displayed at a first screen position.

Moreover, the method further preferably includes the steps of receiving second touch information that is different from the first touch information, the second touch information indicating that a second location has been touched on the display by a finger movement away from the first location, moving the menu in a direction that is inverse to a direction that points from the first touch position to the second touch position to reposition the menu at a second screen position, determining whether one menu item of the plurality of menu items lies at the first location, and highlighting the one menu item from the plurality of menu items based on a result of said determining.

According to yet another aspect of the present invention, a non-transitory computer readable medium having computer instructions recorded thereon is provided, the computer instructions configured to perform a method for displaying a menu when executed on a hardware processor of an electronic device having a touch-sensitive display for displaying a graphical user interface. The method preferably including the steps of generating a menu icon in the graphical user interface on the display, receiving first touch information indicating that a first location associated with a surface area of the menu icon has been touched on the display, and displaying a menu that is associated with the menu icon to show a plurality of menu items in the graphical user interface after receiving the first touch information, the menu being displayed at a first screen position;

In addition, the method preferably further includes the steps of receiving second touch information that is different from the first touch information, the second touch information indicating that a second location has been touched on the display by a finger movement away from the first location, moving the menu in a direction that is inverse to a direction that points from the first touch position to the second touch position to reposition the menu at a second screen position, determining whether one menu item of the plurality of menu items lies at the first location, and highlighting the one menu item from the plurality of menu items based on a result of said determining.

The summary of the invention is neither intended nor should it be construed as being representative of the full extent and scope of the present invention, which additional aspects will become more readily apparent from the detailed description, particularly when taken together with the appended drawings.

### BRIEF DESCRIPTION OF THE DRAWINGS

FIG. 1 shows a computer system and devices that can be used for implementing the inverse sliding menu according to one aspect of the embodiments of the present invention;
FIGS. 2A-2E show exemplary graphical user interfaces when a user operates the inverse sliding menu on a graphical user interface according to another aspect of the embodiments of the present invention;
FIGS. 3A-3F show exemplary graphical user interfaces when a user operates the inverse sliding menu on a graphical user interface according to still another aspect of the embodiments of the present invention;
FIGS. 4A-4B show exemplary graphical user interfaces when a user operates a circular inverse sliding menu on a graphical user interface according to yet another aspect of the embodiments of the present invention;
FIGS. 5A-5C show exemplary graphical user interfaces when a user operates a rotatable inverse sliding menu on a graphical user interface according to a further aspect of the embodiments of the present invention;
FIGS. 6A-6C show exemplary graphical user interfaces when a user operates a inverse sliding menu with a matrix arrangement of menu items on a graphical user interface according to a further aspect of the embodiments of the present invention; and
FIG. 7 shows an exemplary hardware embodiment of a device that is configured to perform a method for generating the inverse sliding menu according to still another aspect of the embodiments of the present invention.
Herein, identical reference numerals are used, where possible, to designate identical elements that are common to the figures. The images in the drawings are simplified for illustrative purposes and are not necessarily depicted to scale.

### DETAILED DESCRIPTION OF THE EMBODIMENTS

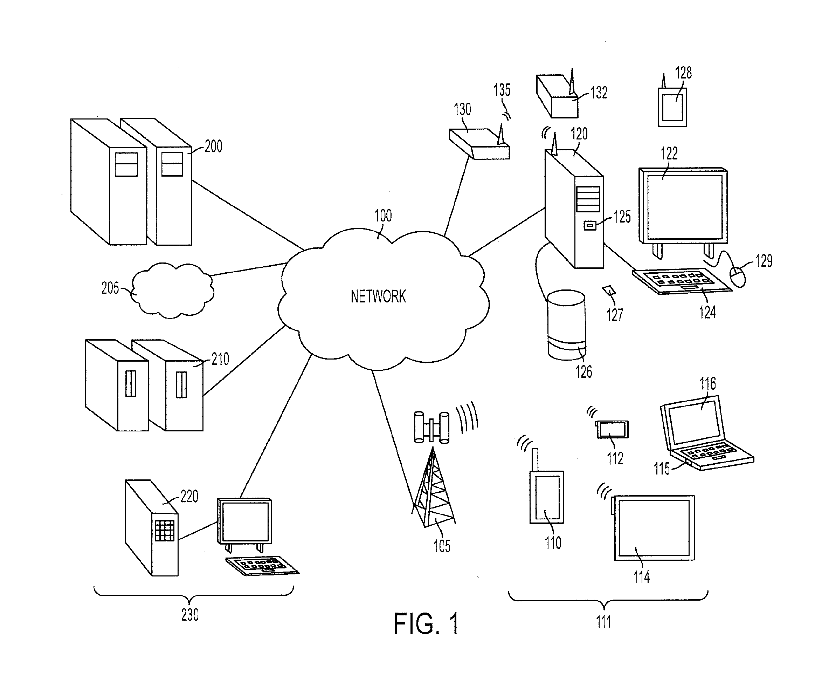

FIG. 1 shows an exemplary system with various data visualization devices 111 that can be used to implement and show the inverse sliding menu on a graphical user interface. The system shown consist of data providing devices or elements 230 such as servers 200, 210, networked computers 220, and other remote storage mediums such as cloud-based storage medium or server farm 205, local storage elements like hard drive 126, network drive 132, portable and removable storage devices 127 such as but not limited to portable drives, flash drives, floppy disks, optical storage media, CD-Rom, DVD-Rom, BluRay^{™}, and other local storage mediums, and data visualization devices 111 such as computers 120, wireless terminal devices 128, mobile network devices such as smartphones 110, tablet computers 114, mobile display devices 112, for example automotive or marine electronics, smart televisions, set-top boxes for televisions like GoogleTV^{™}, Roku^{™}, AppleTV^{™},ChromeCast^{™}, laptop computers 118 that connect to a mobile data system 105. Data providing devices 230 and data visualization devices 111 are directly or indirectly connected to each other via network 100, for example the Internet 100 or via a local area network generated by router 130. Servers 200, 210 and cloud-based storage medium or server farm 205 are also connected to network 100 and include various databases, for example cloud or local databases that store various kind of content. For example, the servers 200, 210 can include web-accessible data storage servers such as commercial cloud-based storage systems like DropBox^{™}, TeamDrive^{™}, Amazon Cloud Drive^{™}, SkyDrive^{™}, BitTorrent^{™}, personal or commercial file transfer protocol (FTP) server hosting services, virtual file hosting services, image data servers like Shutterfly^{™}, Picasa^{™}, Flickr^{™}, video servers such as YouTube^{™}, DailyMotion^{™}, music servers like iTunes^{™}, gaming server portals to access gaming history, performance data, scores, access portals to Social Media sites like Instagram^{™}, Facebook^{™}, Google+^{™}, MySpace^{™}, FourSquare^{™}, Twitter^{™} and other services that can store personal or other data records, such as but not limited to sports and tracking services like Endomondo^{™}, Runkeeper^{™}, SportsTracker^{™}, AlpineReplay^{™}, OruxMaps^{™}, basic text files such as notepad entries, UNIX™ text files, database access systems such as Oracle or Microsoft Access^{™} database systems, data servers with economic, political, and financial data, bank servers with account and portfolio information from personal accounts and securities trade data, Outlook^{™} or Google^{™} calender and task servers, mail servers. Computer 220 can be configured as a webserver or as another device that can share data components with the network 100. All servers 200, 205, 210 and computer 220 can provide for data source components that underlie menu items of the inverse sliding menu.

Next, data visualization elements 111 or terminal devices can be used to show the inverse sliding menu. As an example, computer 120 can be used as a data visualization element 111 and is shown with a keyboard 124 and a mouse 129 as a data input devices that can be operated by user U, and a display screen 122 that can be used for displaying a graphical user interface that will display the inverse sliding menu, and also includes a drive 125 for reading removable storage devices 127. Removable storage device 127 is a non-transitory medium that can store a computer-readable program thereon in the form of computer readable instructions. The computer program thereon can be configured such that it is capable of and configured to perform the method to generate the inverse sliding menu, when the instructions are performed on computer 120. Similarly, the computer program can also be adapted to perform the method to generate the inverse sliding menu on other data visualization devices or elements 111 such as smart phone 110, tablet computer 114, portable computer or laptop 116 having a removable storage medium reader 115, terminal device 112 such as a car electronic device, portable video player, marine electronics, wireless terminal 128.

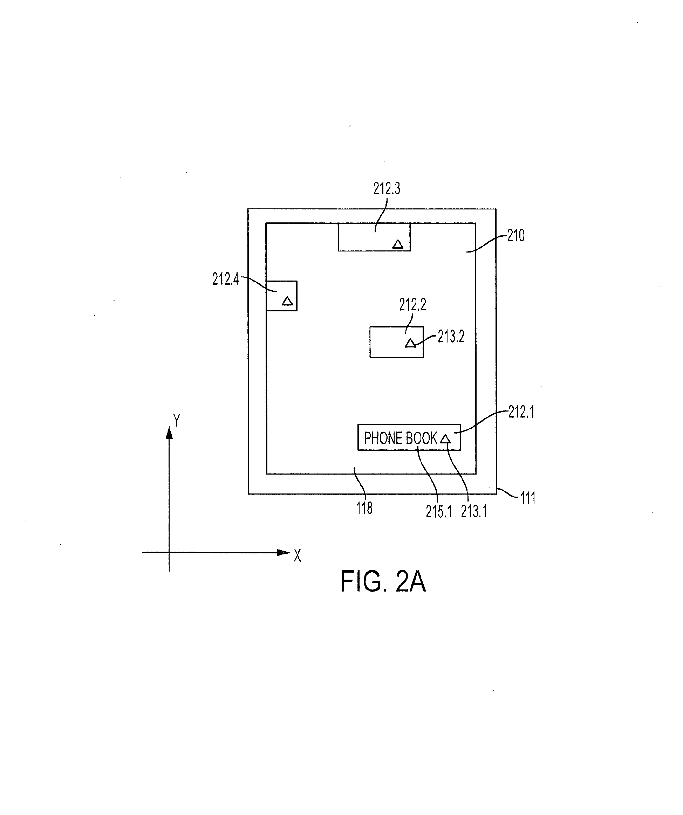

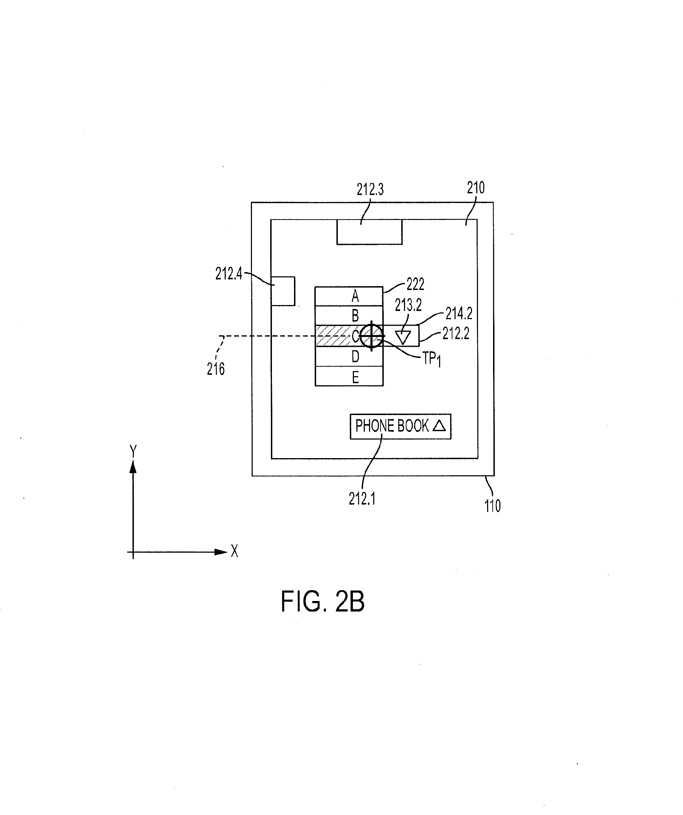

FIGS. 2A-2E are schematic representations of different stages of a data visualization device or terminal 111 displaying a touch-operable graphical user interface 210 (GUI) on a touch-sensitive display 118. User can operate device 111 by using the touch-sensitive display 118. First, in FIG. 2A, four different exemplary menu icons 212.1, 212.2, 212.3, and 212.4 are shown at different positions on the GUI 210 of display 118. Each of the menu icons 212 are parent elements that can be touched so that a corresponding inverse sliding menu 222 is displayed, and can be located at various locations on GUI 210, for example touching a lateral side end of GUI 210 with menu icon 212.4, touching a top end with menu icon 212.3, arranged in close proximity to a border of GUI 210, or being arranged in the middle of GUI with menu icon 212.2. Next, as shown in FIG. 2B, a user can touch or press one of the menu icons 212, for example icon 212.2, with a an initial touch position TP₁ by using his finger, touch device, stylus, or glove, such that the barycenter of the touch surface activated by the finger lies within a surface area of the menu icon 212.2. Menu icons 212 can display a label or icon 215.1 that is representative or descriptive for an data components, functions, or programs that are associated with respective menu icon 212, and can also display a label icon 213.1 that is indicative whether the menu can be popped-up or opened, for example indicating the status that the menu underlying the menu icon 212.1 is currently closed. For example a plus ("+") symbol or an arrow pointing upwards can indicate that menu icon 212 can be opened to show an associated inverse sliding menu 222.

Upon touching menu icon 212.2, a sliding menu 222 that is associated with the menu icon 212.2 appears on the display 118 to show a consecutive list or arrangement of menu items A-E as shown in FIG. 2B. In the variant shown, sliding menu 222 has five (5) different menu items A-E that are arranged in the y-direction to be adjoining each other, each separated from each other by the same distance, and the sliding menu 222 appears either on the left side or on the right side of menu icon 212.2. Inverse sliding menu 222 is also displayed such that sliding menu 222 partially covers its associated menu icon 212.2. However, it is also possible that then menu items A-E are arranged along another linear direction, for example in the horizontal z-direction, or in an oblique direction. In another variant, it is possible that menu times A-E are arranged as individual elements along a linear direction, but are not adjoining each other. In the variant shown, upon touching icon 212.2, sliding menu 222 appears on the left side of icon 212.2, because there is sufficient space available on GUI 210 to display sliding menu 222 without the need to move the other menu icons 212.1, 212.3, and 212.4 around to give space to sliding menu 222. For this purpose, it can be first determined which side of icon 212.2 menu 222 can be placed, depending on available space. In a variant, for example in case there is insufficient space to display sliding menu 222, the other menu icons 212.1, 212.3, and 212.4 can be moved to provide for display space for menu 222, or menu 222 is displayed to cover , the other menu icons 212.1, 212.3, and 212.4. In the variant shown, menu 222 is arranged such that a center menu item C is arranged adjacent to icon 212.2.

Upon appearance of menu 222, icon 212.2 that has been pressed or selected can also transform into a smaller-sized return icon 214.2 that is arranged adjoining the menu 222. Instead of displaying label icon 213.2 is changed to indicate that return icon 214.2 can be used to close the menu 222. For example, label icon 213.2 can be changed from an arrow that is pointing upwards indicating that an underlying menu can be opened, to an arrow that is pointing downwards indicating that the menu 222 can be closed by return icon 214.2, or can be changed from a plus ("+") symbol to a negative symbol ("-"). In variant, instead of being arranged adjacent to sliding menu 222, the sliding menu is arranged centered around the position where the icon 212.2 is, and the icon 212.2 is replaced by return icon 214.2 that is arranged to adjoin menu 222. In another variant, upon touching menu icon 212.2 and the display of inverse sliding menu 222, the display of associated menu icon 212.2 is entirely removed.

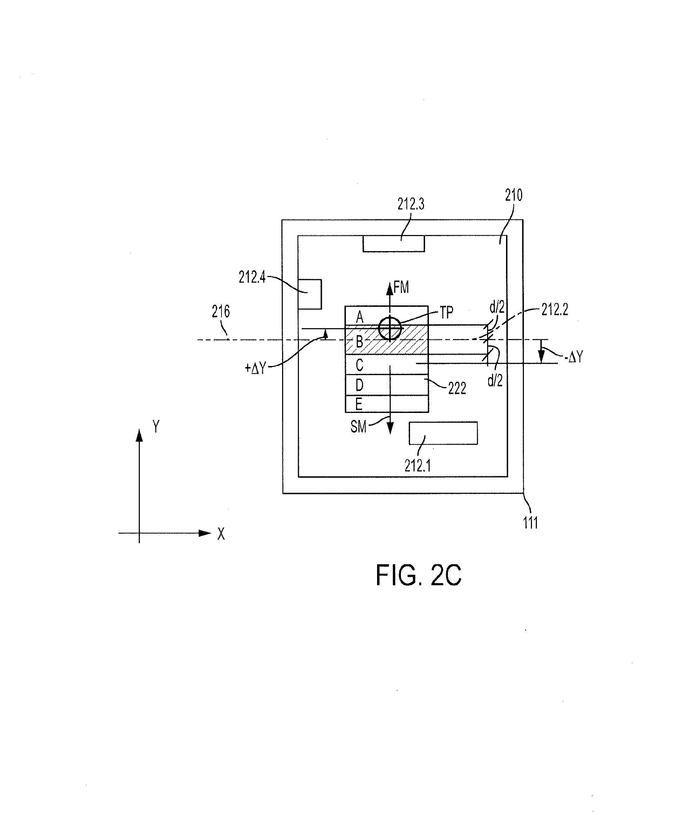

Next, FIG. 2C shows how the user can inversely move sliding menu 222 to select individual menu items A-E. First, once the menu 222 is displayed after pressing menu icon 212.2, the user can maintain his finger at the initial touch position TP₁ and a menu item that is currently located at or in close proximity of touch position TP₁ is selected, in the variant shown, menu item C. Selected menu item C will be displayed differently than the other menu items A-B and D-E to visually indicate to the user that this menu item is currently selected. This can be done for example by showing a frame around the selected menu item, displaying the selected menu item in a different color, increasing or decreasing the brightness, blinking, changing colors, wobbling the text inside selected menu item, highlighting the text inside selected menu item in a different color or shading, displaying icons that point to the selected menu item. By releasing finger from display 118, no touch position TP will be detected by device 111 anymore, and a function that is associated with the currently selected menu item C will be executed. Each menu item A-E can be associated with a different function, for example, to display data elements that are associated with a respective menu item, to launch an installed application that is associated with the respective menu item, to make a phone call to a number that is associated to the respective menu item, to call up an additional menu, for example by showing another menu icon 212 upon selecting a menu item A-E. As another example, each menu item A-E can be associated to an Internet browser application and a hyperlink, and upon selecting one of the menu items A-E, a corresponding webpage that is linked by the hyperlink is displayed via the browser.

For example, menu 222 can be a short-cut menu for a smart phone or mobile phone 110 that can be configured by a user to rapidly change a variety of device settings with a single finger swipe over GUI 210, for example but not limited to turn the silent mode of phone 110 on and off, turn Wifi reception on and off, turn reception of global positioning signals (GPS) on and off, turn Bluetooth reception on and off, activate and deactivate airplane mode. Also, menu 222 can be used to provide a short-cut to execute different functions that are frequently used by user, and menu items A-E can be automatically generated to be associated with the most used functions of a device 111, and regularly be updated to include the most used functions that the user has selected using device 111.

As the menu 222 is arranged vertically with menu items A-E arranged along the y-direction, a center line, center area, or center zone 216 will be defined that is arranged to intersect through menu icon 212.2 or return item 214.2, and will thereby also cross through the first selected menu item C, to be arranged substantially in the geometric middle between an upper and lower border of the surface that forms menu icon 212.2 or return item 214.2. Center line, center area, or center zone 216 cam be defined as a line in the form of a fixed position in the y-direction, a rectangular area that extends in an x-direction, or a similar area that extends horizontally. Also, center line 216 can also be defined so as to intersect with a y-position of the initial touch position TP₁ or at a location in close proximity thereof. Center line 216 can be made visible on GUI 210 as a fine line, dotted line, transparent line, bar, longitudinal rectangular area, so that a visual reference is given by the user for selecting different menu items A-E, especially in a case where menu icon 212.2 is not displayed once menu 222 appears. It is also possible that center line 216 is not shown.

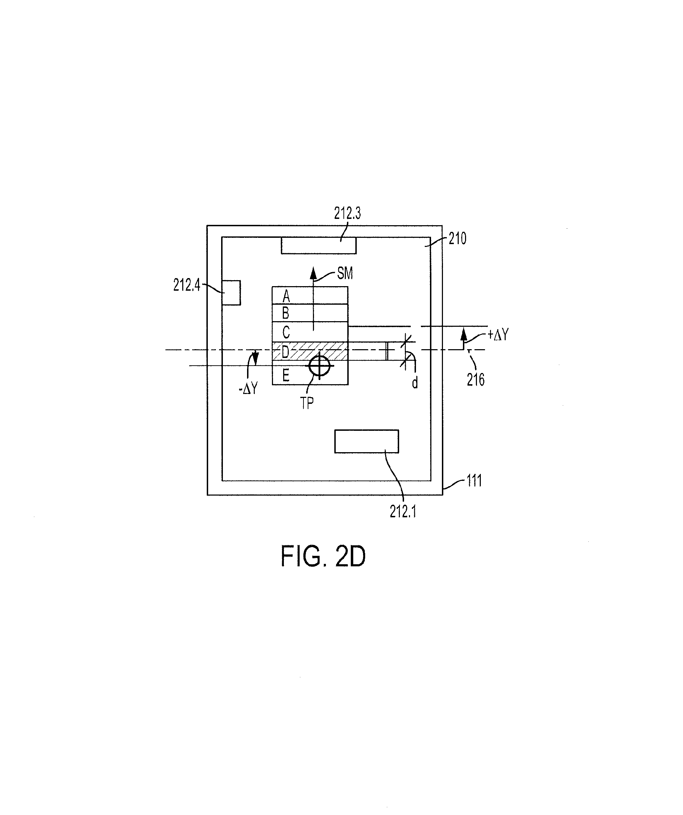

The user can move touch point TP in a positive y-direction away from center line 216 by a finger movement FM that leads to an inverse sliding movement of menu 222 in a sliding direction SM that is opposite to finger movement FM in the negative y-direction, as shown in FIG. 2C. Conversely, as shown in FIG. 2D, the user can move touch point TP in a negative y-direction away from center line 216 by a finger movement FM that leads to an inverse sliding movement of menu 222 in sliding direction SM that is opposite to finger movement FM in the positive y-direction. For example, as shown in FIG. 2C, the movement of touch point TP to a distance +ΔY along the positive y-direction away from center line 216 has resulted in a proportional, inverse sliding movement SM of sliding menu 222 along the negative y-direction - ΔY, and as shown in FIG. 2D, the movement of touch point TP to a distance -ΔY along the negative y-direction away from center line 216 has resulted in a proportional, inverse sliding movement SM of menu 222 along the positive y-direction +ΔY. In the variant shown, a finger movement FM of touch point TP resulted in a proportional corresponding inverse sliding movement SM that is a proportional factor 2.5 larger than the FM, so that 2.5 x |+ΔY| = |-ΔY|. However, other factors can be chosen, and it is also possible that device 111 has a menu where the proportional factor can be chosen by user, for example to be in a range from 1 to 10. This allows displaying a menu 222 that has a longitudinal expansion that is substantially longer than a length or width of a display 118, so that parts of menu 222 will not be displayed, but can be moved into a viewable area of display 118 by the finger movement FM.

In the variant discussed above, the sliding movement SM of menu 222 is inversely proportional to the finger movement FM, but in another variant, it is also possible that the SM does not have a linear relationship to the FM. For example, when moving TP away from center line 216, until a first threshold position is reached, the sliding movement can be slower, for example by a proportional factor 1.5-3, and upon passing finger movement beyond the first threshold, but before a second threshold, the sliding movement SM can be increased as compared to FM, to a proportional factor of 2-5. Next, upon passing the second threshold, the sliding moment SM can be reduced to a speed with a proportional factor of 1.5 to 3 again. The first and the second threshold can lie within an interval of the finger movement FM that is required to move menu 222 from the selection of one menu item to the selection of the adjacent one, and these threshold positions can be repeated for all the finger movements to move menu 222 for selecting any menu item. In another variant, the proportional factor could gradually increase until the first threshold, and could gradually decrease from the second threshold until the next menu item is selected. Also, upon the selection of a new menu item, the device 118 could be configured such that it vibrates for a short moment. These features can provide for a snap-lock movement feel of the menu 222, and can provide for a visual and tactile feedback that allows to easier select menu items A-E.

As shown in FIGs. 2C and 2D, by moving sliding menu 222 up and down along the y-direction with inverse sliding movement SM, a different menu item from menu items A-E will be moved to intersect by center line 216, as the center line 216 will remain at the initial touch position TP₁. As soon as menu 222 is moved such that a different menu item is intersected by center line 216, the menu item that has been moved out from center line 216 will be deselected, and the menu item that is now being intersected by center line 216 will now be selected instead. For example, in the transition from FIG. 2B to 2C, menu item C is deselected, and thereafter menu item B is newly selected, and in the transition from FIGs. 2B to 2D, menu item C is deselected, and thereafter menu item D is newly selected. As shown in FIGs. 2B-2E, the initial menu icon 212.2 or return icon 214.2 remain displayed during the same position at center line 216 at this process while the sliding menu 222 can slide up and down in the y-direction as compared to the position of center line 216, menu icon 212.2, or return icon 214.2.

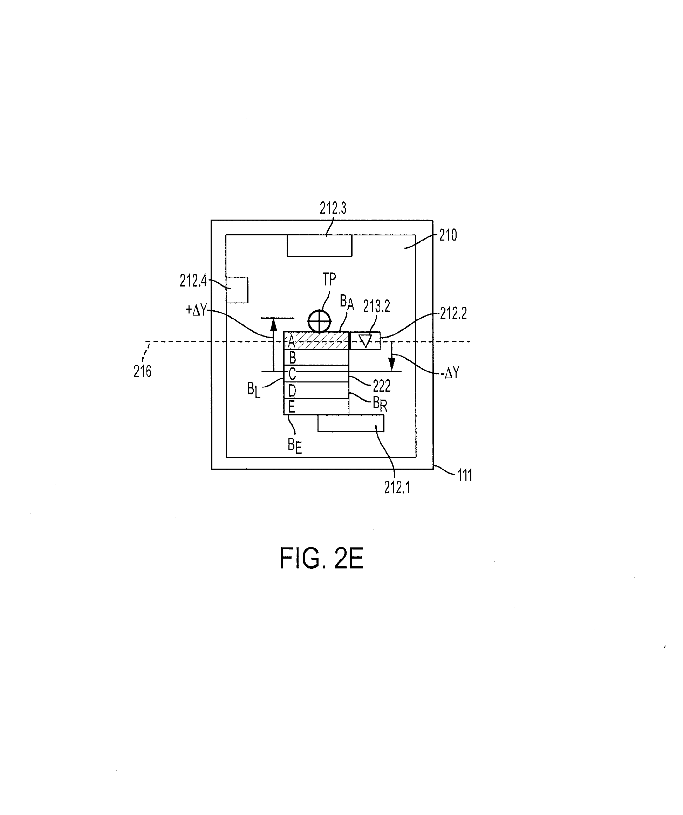

FIG. 2E depicts a situation where the first menu item A at the upper boundary of menu 222 has reached the center line 216 and is selected, and no other menu items are selectable above item A. Once such position is reached, the sliding movement SM of menu 222 can be blocked, although touch point TP can still be moved further away from center line by finger movement FM. The blocking of sliding movement SM can be done when the center line 216 reaches the middle of the first or the last menu item A, E, or when the center line 216 reaches the upper boundary B_{A} of first menu item A, or reaches the lower boundary BE of the last menu item E. It is possible that by moving menu 222 around by the finger movement FM and corresponding proportional inverse sliding movement SM, menu 222 that interferes with icon 212.1 is either displayed over icon 212.1 without moving icon 212.1 but it is also possible that icon 212.1 is fully displayed but moved by menu 222 so that no overlap occurs. Also, it is possible that menu 222 is displayed to be transparent, so that another menu icon that lies underneath menu 222 is still visible.

Moreover, it is also possible that by moving touch point TP left or right in the positive or negative x-direction outside of the surface area defined by menu 222, none of the menu items A-E is selected anymore, the display of menu 222 is stopped, and icon 212.2 is displayed again. Thereby, by moving finger with a finger movement FM beyond left boundary B_{L} that is defined by the left outer edge of menu 222, or by moving finger with a finger movement FM beyond right boundary B_{R} that is defined by the right outer edge of menu 222, no menu item is selected, and no function is executed, and the display returns to the state shown in FIG. 2A.

Accordingly, as explained above, by a simple finger movement FM that only requires an initial touch at TP₁, and a transversal finger movement FM that maintains a finger contact to display 118 and allows to select one of a plurality of menu items by inverse sliding movement SM, a function that is associated with the selected one menu item can be executed. No scrolling is necessary, as the inverse sliding that is multiplied by a proportional factor of the finger movement FM allows to select from multiple menu items, even if the menu 222 does not even fit into the surface area defined by screen 118 or graphical user interface 210. For example, using a proportional factor of 5, with a finger movement FM that covers a distance of 50mm, it is possible to inversely slide a menu having a full displayed length of 250mm for full display and menu item selection, even on a screen 118 that may have a length of less than 100mm. Moreover, these features allow to have rapid control of various functions by a single finger movement, by pressing the desired menu icon 212 to display the underlying menu 222, moving the finger by a finger movement FM to inversely move menu 222 to select a desired item A-E, and to release or remove finger from GUI 210 to select the currently highlighted menu item A-E. In particular, this allows for a fast and precise selection of menu items with touch screens of smart phones by using one hand, and using the thumb of the hand that holds the smart phone 118 for the finger movement FM. Also, as explained above, because a finger movement FM results in an inverse sliding movement SM that is multiplied a certain proportional factor, it is possible to display and operate menus 222 that are longer than a length or width of a display 118 without the need implement additional scrolling features of menu 222, and the menu can be moved for selection and scrolling by a single finger touch and movement.

In a variant, it is also possible that menu 222 disappears after the TP is not moved for a certain time period. Moreover, in another variant, it is also possible to select menu items A-E without the need of releasing the touch position TP. For example, upon resting with touch position TP on a certain menu item C for a predefined time duration T, for example more than 1 second, without that the touch point TP is moved out of a surface area defined by the currently selected menu item, the function associated with menu item C can executed. This variant may be advantageous if a device has to be operated that is subject to heavy vibrations, and upon releasing the finger from a menu item, a touch position TP may be inadvertently moved.

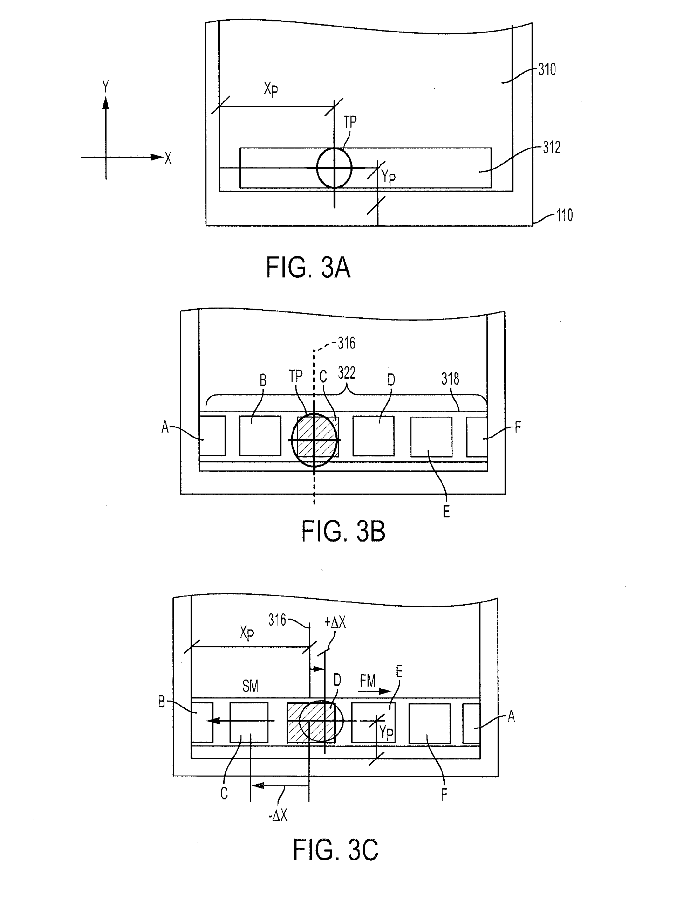

FIGs. 3A to 3F show another embodiment of the present invention, in which six (6) menu items A-F can be displayed in an inverse sliding menu 322 that are arranged along the x-direction in a continuous loop arrangement. As shown in FIG. 3A, a menu icon 312 is displayed as a longitudinal bar along a lower border of GUI 310 of device 110, upon pressing a location on surface area of menu icon 312, a touch position TP is registered at the coordinates Xp and Yp. Next, as shown in FIG. 3B, upon detecting that the touch position TP is inside surface area of menu icon 312, a center line 316 is defined at that same location Xp and Yp, and the menu 322 appears along a displayed band or stripe 318 that stretches along the entire width in an x-direction of the GUI 310. Seen in an y-direction, menu 322 is centered at the same y-direction position as the initially displayed menu icon 312. Also, menu items A-F are shown, evenly spaced out along the band 318, with menu item C being displayed to be selected, and centered in an x-direction with center line 316.

Next, as shown in FIG. 3C, the user can move the touch position TP in a positive x-direction away from center line by a FM of +ΔX that results in an inverse sliding movement SM of menu items A-F in a negative x-direction -ΔX. In the variant shown, the a finger movement FM of touch point TP resulted in a proportional corresponding inverse sliding movement SM that is a factor four (4) larger than the FM, so that 4 x |+ΔX| = |-ΔX|. Thereafter, the menu item that is currently located such that its surface area intersects with center line 316 is selected, in the variant shown, menu item D as the initially selected menu item C is moved away from center line 316. Moreover, as the menu items A-F are arranged in a continuous loop, menu item A that was initially displayed at the outer left edge of GUI 310 is pushed out from being displayed by the GUI 310 in the negative x-direction to reappear on the outer right edge of GUI 310, as menu item F has moved in closer to the negative x-direction.

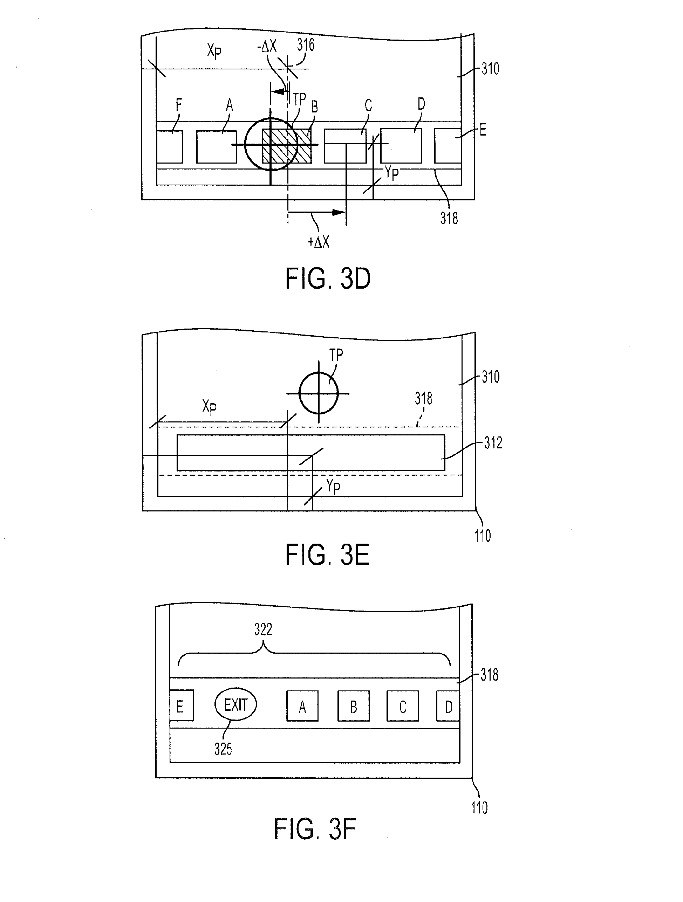

Moreover, as shown in FIG. 3D, the user can move the touch position TP in a negative x-direction away from center line 316 by a FM of -ΔX that results in an inverse sliding movement SM of menu items A-F in a positive x-direction of +ΔX, and menu item F is pushed out of GUI 310 in an x-direction to reappear on the left edge of GUI 310. Also, menu item B is moved such that its surface area intersects with center line 316, and is thereby selected. By performing movements SM of the TP by user over different distances away from center line 316, all menu items A-F can be moved by the inverse sliding movement SM to lie at the location of center line 316, so that one of menu item A-F is selected, and upon releasing the finger or touch device from GUI 310, the touch point TP is not registered anymore and a function that is associated with the currently selected menu item A-F is executed.

Next, FIG. 3E shows a situation where the user moves touch point TP outside of the surface area defined by band 318. Upon detection that touch point TP lies outside the surface area defined by band 318, the menu 322 is stopped from being displayed by GUI 310, and the menu icon 312 is displayed again, and none of the functions associated with menu items A-F are selected. Thereby, if a user erroneously has touched menu icon 312 and menu 322 is displayed, despite the fact that it was not intended to touch it and does not want to execute any function that is associated with menu items A-F of menu 322, the user can simply move touch point TP outside of a defined boundary for example by moving finger in positive y-direction to move TP outside a surface area of band 318. In a variant, as shown in FIG. 3F, it is possible that one of the displayed menu items is an exit item 325, and is displayed such that the user can easily identify the exit item 325 as compared to the other menu items A-E, having at least one of a different size, shape, labeling, color, icon, and texture. Exit item 325 can be displayed to be any one of the menu icons, or can be specifically the first menu item that is selected after the user selects menu icon 312, so that upon release of touch point TP, the menu 322 is exited without selecting any function. Thereby, the user has to make a sliding movement SM to select any function that is associated with menu items A-E, to move the selection away from exit item 325. In the variant shown with FIG. 3F, the device 110 can be configured such that if touch point is moved outside of surface area defined by band 318, the menu 322 is still displayed.

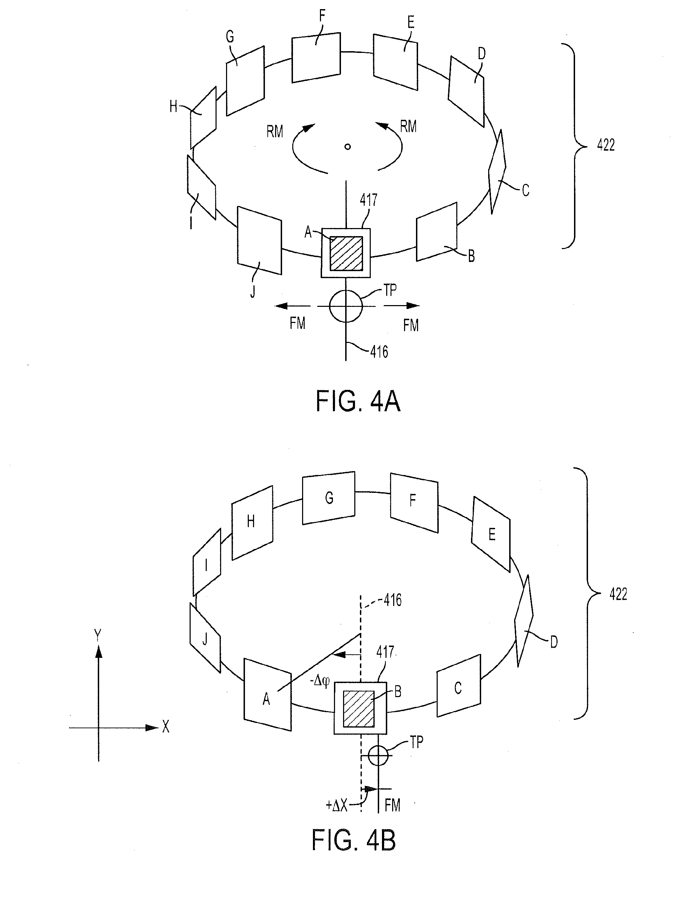

FIGs. 4A and 4B show yet another embodiment of the present invention, in which ten (10) menu items A-J are arranged in a circle to show a circular menu 422, once the user presses the associated menu icon, and the associated menu icon not being displayed anymore once circular menu 422 appears. The center line 416 is defined at a location where the user has initially pressed by touch point TP on the menu icon to display menu 422, and the menu item A is initially selected. In the variant shown, the selection is indicated by displaying a frame 417 that is located at the same, fixed position on the display while the menu 422 is shown, surrounding menu item A, and the highlighting of the menu item that is currently located in the frame 417. In this variant, instead of the finger movement FM translating into an inverse linear sliding movement SM of the menu, the finger movement FM translates into a counter rotational movement RM of the circular arrangement of the menu items A-J.

For example, as shown in FIG. 4B, a movement +ΔX in the positive x direction as measured from center line 416 of touch point TP results in a counter rotation of all menu items A-J by an angle -Δϕ in the clockwise direction, and in the variant shown, a FM of about 7mm has resulted in a counter rotation of -Δϕ = 36° such that menu item B is now located inside frame 417 and is highlighted for being selected, as there are eleven (11) menu items that are arranged at an equal angular distance. Analogously, a movement -ΔX in the negative x direction as measured from center line 416 of touch point TP results in a counter rotation of all menu items A-J by an angle +Δϕ in the counter-clockwise direction. In the variant shown, the proportional relationship between the FM and the RM should be such that a movement range of a user's thumb without having to reposition his thumb allows to cover a RM of ±180°, for example such that a FM in a range of 10mm to 25mm can generate a RM of 180°.

Once user releases his finger or touch device from screen, touch point TP is removed, and a function that is associated with the menu item that is currently selected and is currently located in frame 417 is executed. At this moment, the display of menu 422 is also stopped. As shown in FIGs. 4A and 4B, the menu items A-J are displayed to be arranged in a circle, but are rendered to be shown in a perspective view. The counter rotation angle is referenced to the top view of the circle. However, it is also possible that the menu items A-J are arranged in a menu that is elliptically arranged, or along an arc.

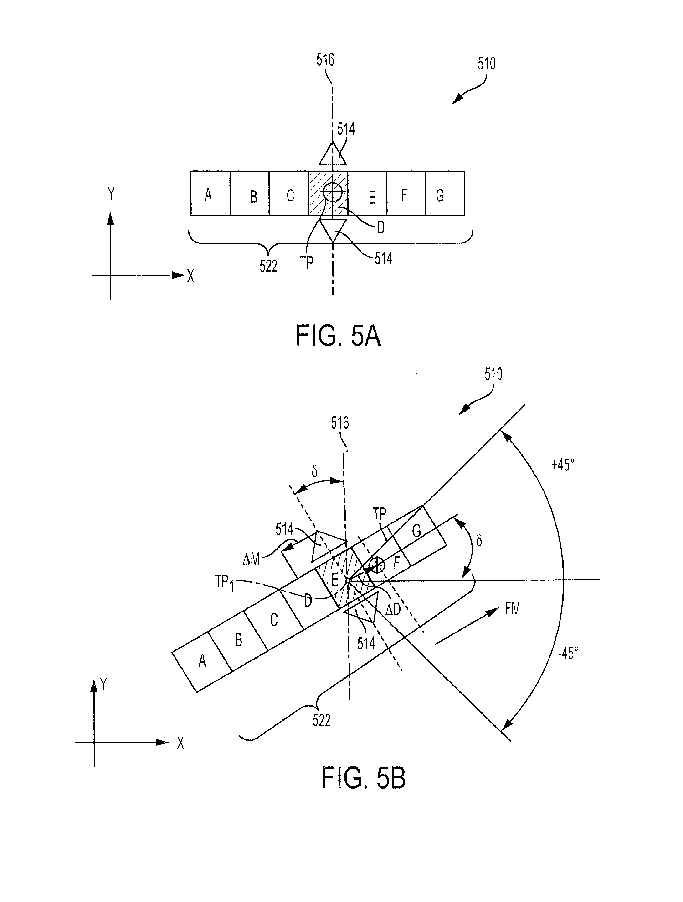

FIGs. 5A to 5C show still another embodiment of the present invention, in which the displayed menu 522 is at least one of rotated and moved such that it remains aligned with a direction of the finger movement FM. First, as shown in FIG. 5A, after touching corresponding menu icon with touch position TP, menu 522 is displayed with seven (7) menu items A-G initially arranged to be extended along an x-direction, and the associated menu icon is not displayed anymore. At the touch position TP, a center line 516 is defined that is arranged in the y-direction to intersect with menu item D that is in the center of menu 522, and menu item D is selected. Also, selection icons 514 are displayed above and below the selected menu item D at a location of center line 516, so that the user can have a visual feedback on where he has to move the menu items A-G for selection. In the variant shown, selection icons 514 are in the form of a triangle centered with center line 516.

Next, as shown in FIG. 5B, touch point TP is moved away from initial touch point position TP₁ by a finger movement FM in both positive and x- and y-direction by ΔD, that results in a proportional inverse sliding movement ΔM of menu 522 in both the negative x- and y-direction. In addition, the display of menu 522 is also rotated by an angle γ that is defined between the x-direction that intersects with initial touch point position TP₁ and a direction defined by a vector from initial touch point position TP₁ to current touch position TP, so that a longitudinal extension of menu 522 lies in a direction of the finger movement FM. Also, selection icons 514 are also rotated around initial touch point position TP₁ by angle γ. By performing a rotation of menu 522 by an angle that is defined by a direction of the finger movement FM from the initial touch position TP₁, it is possible to allow the menu follow the user's finger movement more accurately, so that a better visual feedback of the menu item selection is given. In a variant, it is possible to limit the rotation of menu 522 to an angle of ±30° or ±45°, and in a case the TP is located outside of such angular range, the display of menu 522 is stopped, and no function associated with menu items A-G is selected.

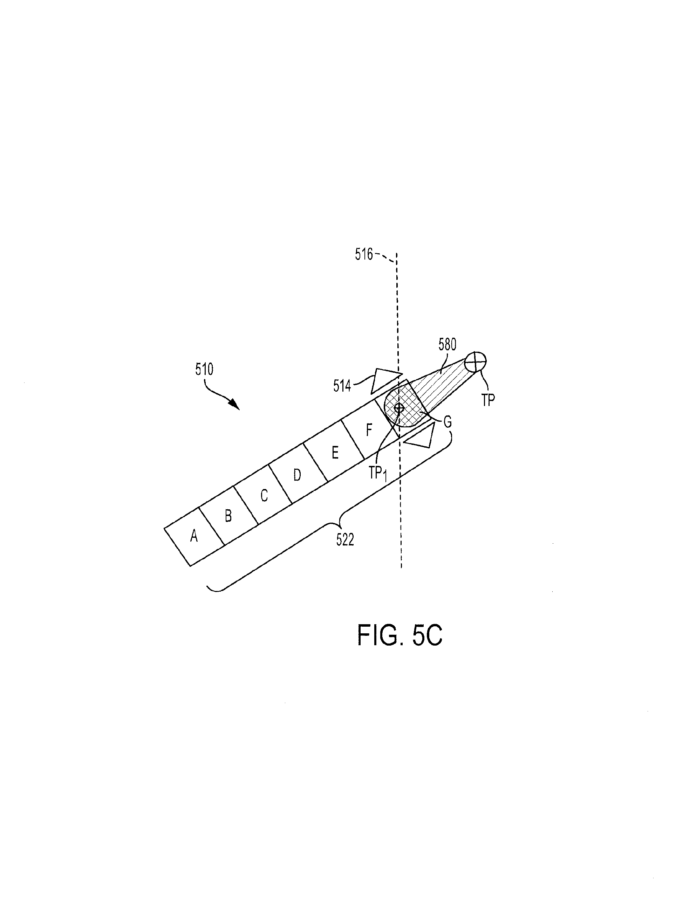

Next, in FIG. 5C, another variant is shown, in which a graphical object 580 is shown that connects the current touch position TP with the initial touch position TP₁. For example, graphical object can be in the form of a line, bar, cone, arrow, or projection, that stretches from the current touch position TP with the initial touch position TP₁, and thereby also visually links the current touch position TP with the currently selected menu item G. Upon movement of finger FM, the graphical object is changed to constantly provide visual feedback to user by connecting TP with the selected menu item. For example, graphical object 580 can be made transparent to the menu 522 and menu items 522 for improved visual feedback. In another variant, instead of rotating menu 522 around initial touch position TP₁, the menu 522 is moved in the x-direction to be constantly centered at the x-position of current touch position TP. Thereby, a movement by finger FM in the x-direction results in a movement of the display position of menu 522 on the GUI 510 to follow the touch position TP, while a movement in the y-direction results in an inverse sliding movement SM of menu 522 with respect to a γ-position of initial touch position TP₁. To exit menu 522 such that no function associated with menu items A-G is executed, an exit menu item can be arranged in menu 522, as shown in FIG. 3F.

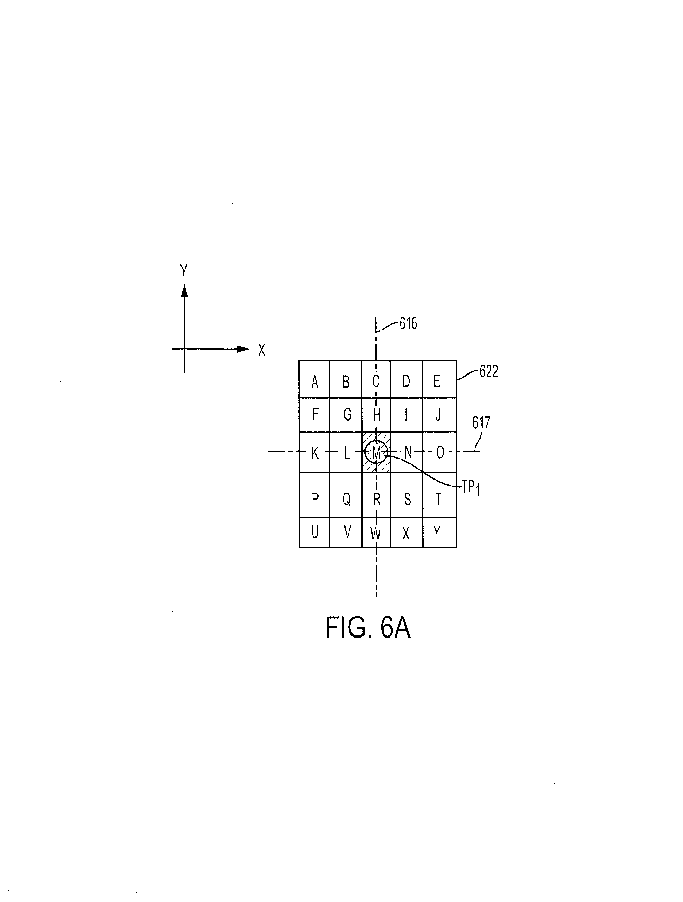

FIGs. 6A-6C show yet another embodiment of the present invention, in which a menu 622 is displayed with twenty-five (25) menu items A-Y in menu 622, but arranged in five-by-five (5x5) matrix. Menu 622 is arranged to be centered at initial touch position TP₁ after a corresponding menu icon (not shown) has been touched. Also, two center lines 616 and 617 are defined, a vertical center line 616 and a horizontal center line 617. The user can thereafter move finger by a finger movement FM in least one of a x-direction and y-direction away from initial touch point TP₁ that results in a proportional inverse sliding movement SM of menu 622 in least one of an opposite x-direction and opposite y-direction, respectively. Thereby the user can directly select one of the menu items A-Y by a finger movement in the two-dimensional direction, by moving a location of initial touch position TP₁ to the desired menu item. The displaying of menu 622 can be removed, and no function associated with menu items A-Y can be executed, as the finger movement FM the menu 622 outside of a location of initial touch position TP₁.

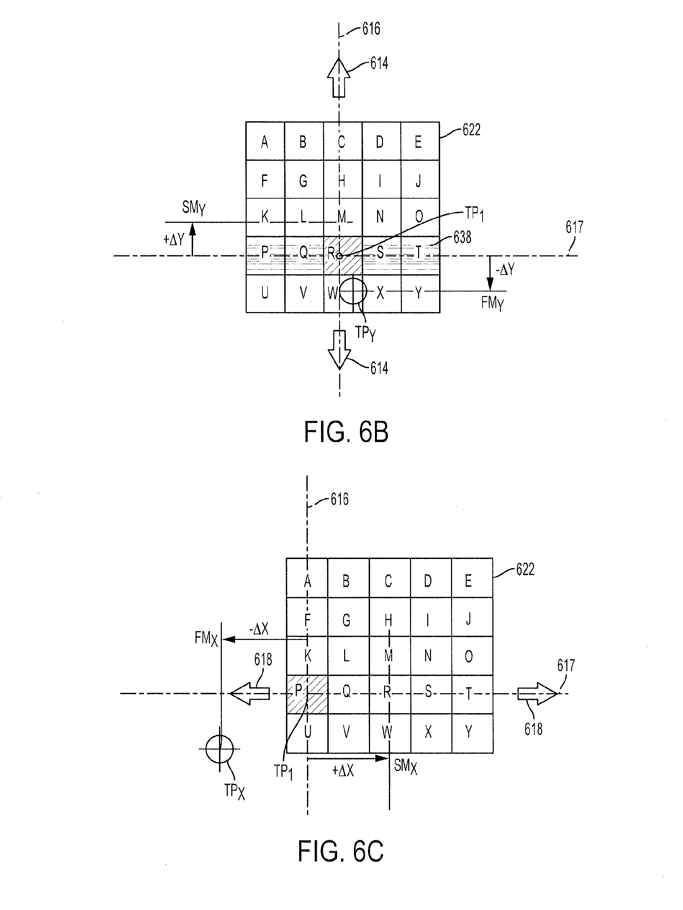

In a variant, instead of allowing the user to perform a two-dimensional finger movement FM, the process of selecting a menu item can be done in two steps, by first allowing a selection of a row, and thereafter a selection of a menu item in the preselected row, or by first allowing a selection of a column, and thereafter a selection of a menu item in the preselected column. FIG. 6B shows a variant in which first a row is selected by the user performing a finger movement FM_{Y} away from TP₁ in a y-direction, for example by -ΔY to generate an inverse sliding movement SM_{Y} of +ΔY. At this time, movements in the x-direction will not cause an inverse sliding movement in the x-direction SMx. Icons 614 can be displayed that indicate which inverse sliding movement is currently enabled for example by arrows that are arranged above and below menu 611. Upon moving the rows to intersect with horizontal center line 617, the entire row is highlighted as being selected. To confirm selection of the currently selected row and to enable inverse sliding movement SMx, either the user can release touching the display 118 to remove touch point TP, or the user can keep the row selected for predetermine period. Next, as shown in FIG. 6C, once the selection of row is confirmed, a single menu item is selected from row with menu items P-T, by the user performing a finger movement FMx away from TP₁ in a x-direction, for example by -ΔX to generate an inverse sliding movement SMx of +ΔX. At this time, movements in the y-direction will not cause an inverse sliding movement in the y-direction SMx of menu 622. Also, after confirming selection of the row, icons 614 are removed from being displayed, and icons 618 can be displayed that indicate that the x-direction inverse sliding movement SMx is currently enabled, for example by arrows that are arranged left and right of menu 611.

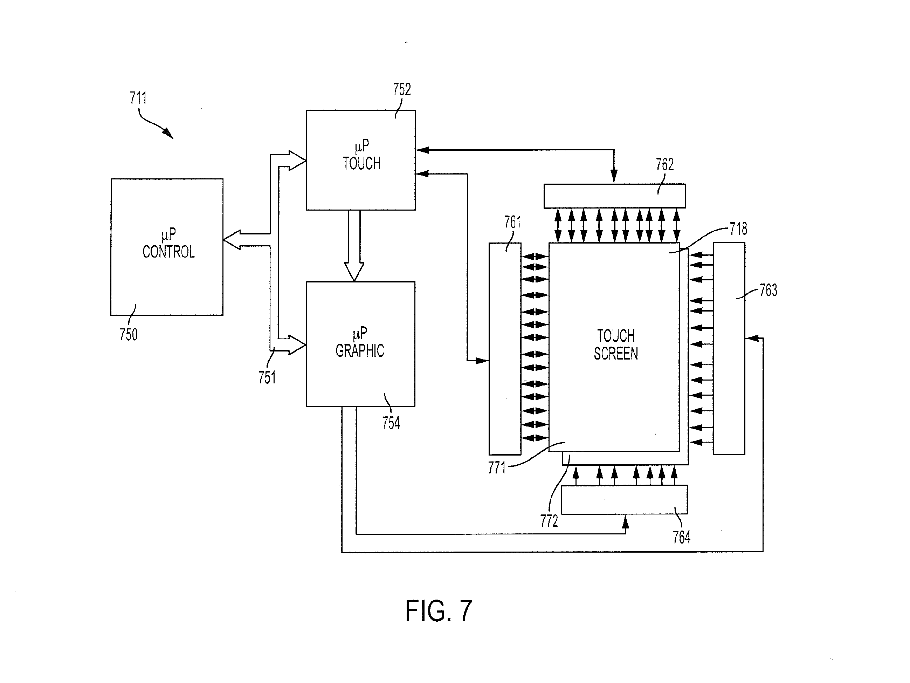

FIG. 7 shows an exemplary hardware structure of a device 711 that can operate the method of generating the inverse sliding menu and executing functions associated with its menu items. The device 711 can include a control processor 750 that forms the main hardware processor of the device, and auxiliary hardware processors, being the touch screen interface processor 752 and the graphics processor 754. The processors are connected to each other via bus 751. Touch screen 718 is made of a display part 772 and a transparent tactile array 771 that lies on top of display part 772 and can be touched by user to generate touch points. Transparent tactile array 771 is connected to horizontal and vertical drivers 762 and 761, respectively, that provide raw tactile information to the touch screen interface processor 752, and the raw tactile information can be processed by touch screen interface processor 752 to provide touch information including one or more coordinates of one or more touch positions, respectively, to the control processor 750, or also to the graphics processor 754. The graphics processor 754 can designed and configured such that the movement of display of menu 222, 322, 422, 522, 622 can be done with a high refresh frequency, so that upon a finger movement FM, a smooth sliding movement SM of menu is displayed. For example, upon capturing a new touch positions by touch screen interface processor 752, a latency time for showing repositioned and moved menu 222, 322, 422, 522, 622 can be very short to allow for a fast movement of menu in real time, to provide a good visual feedback to user.

Moreover, graphics processor 754 is connected to horizontal and vertical display drivers 764 and 763 for providing signals to operate display 718. Graphics processor 754 is configured to generate the GUI 210, and is also configured to display, reposition, and change menu icons 212, inverse sliding menus 222, 322, 422, 522, 622, and menu items A-E on screen 718. For example, touch screen interface processor 752 can provide different touch information to graphics processor 754, so that the graphics processor 754 can position and move menu 222, 322, 422, 522, 622 on the screen 718, without the need that control processor 750 intervenes. Touch screen interface processor 752 can also provide for information that indicates presence or absence of a touch position, and coordinates of one or more touch positions. Either graphics processor 754 or control processor 750 can determine whether a touch position that is represented by the touch information received from touch screen interface processor 752 lies within surface areas of respective menu icons, or menus 222, 322, 422, 522, 622.

While the invention has been disclosed with reference to certain preferred embodiments, numerous modifications, alterations, and changes to the described embodiments are possible without departing from the sphere and scope of the invention, as defined in the appended claims and their equivalents thereof. Accordingly, it is intended that the invention not be limited to the described embodiments, but that it have the full scope defined by the language of the following claims.

## Claims

1. An electronic device having a touch-sensitive display for displaying a graphical user interface and a hardware processor, the hardware processor configured to:
generate a menu icon in the graphical user interface on the display;
receive first touch information indicating that a first location associated with a surface area of the menu icon has been touched on the display;
display a menu that is associated with the menu icon to show a plurality of menu items in the graphical user interface after receiving the first touch information, the menu being displayed at a first screen position;
receive second touch information that is different from the first touch information, the second touch information indicating that a second location has been touched on the display by a finger movement away from the first location;
move the menu in a direction that is inverse to a direction that points from the first touch position to the second touch position to reposition the menu at a second screen position;
determine whether one menu item of the plurality of menu items lies at the first location; and
highlight the one menu item from the plurality of menu items based on a result of said determining.

2. The electronic device according to Claim 1, wherein in the displaying of the menu, the first screen position of the menu is located such that the first location of the first touch information is within a surface area of a menu item of the plurality of menu items, the hardware processor further configured to:
highlight the menu item from the plurality of menu items.

3. The electronic device according to Claim 1, the hardware processor further configured to:
detect that a touch that generates the second touch information has been released; and
execute a function that is associated with the highlighted menu item.

4. The electronic device according to Claim 1, the hardware processor further configured to:
detect that a touch that generates at least one of the first and the second touch information has been released; and
removing a display of the menu.

5. A method for displaying a menu performed on an electronic device having a touch-sensitive display for displaying a graphical user interface and a hardware processor, the method comprising the steps of:
generating a menu icon in the graphical user interface on the display;
receiving first touch information indicating that a first location associated with a surface area of the menu icon has been touched on the display;
displaying a menu that is associated with the menu icon to show a plurality of menu items in the graphical user interface after receiving the first touch information, the menu being displayed at a first screen position;
receiving second touch information that is different from the first touch information, the second touch information indicating that a second location has been touched on the display by a finger movement away from the first location;
moving the menu in a direction that is inverse to a direction that points from the first touch position to the second touch position to reposition the menu at a second screen position;
determining whether one menu item of the plurality of menu items lies at the first location; and
highlighting the one menu item from the plurality of menu items based on a result of said determining.

6. The method according to Claim 5, wherein in the step of displaying of the menu, the first screen position of the menu is located such that the first location of the first touch information is within a surface area of a menu item of the plurality of menu items, the method further comprising:
highlighting the menu item from the plurality of menu items.

7. The method according to Claim 5 further comprising:
detecting that a touch that generates the second touch information has been released; and
executing a function that is associated with the highlighted menu item.

8. The method according to Claim 5 further comprising:
detecting that a touch that generates at least one of the first and the second touch information has been released; and
removing a display of the menu.

9. A non-transitory computer readable medium having computer instructions recorded thereon, the computer instructions configured to perform a method for displaying a menu when executed on a hardware processor of an electronic device having a touch-sensitive display for displaying a graphical user interface, the method comprising the steps of:
generating a menu icon in the graphical user interface on the display;
receiving first touch information indicating that a first location associated with a surface area of the menu icon has been touched on the display;
displaying a menu that is associated with the menu icon to show a plurality of menu items in the graphical user interface after receiving the first touch information, the menu being displayed at a first screen position;
receiving second touch information that is different from the first touch information, the second touch information indicating that a second location has been touched on the display by a finger movement away from the first location;
moving the menu in a direction that is inverse to a direction that points from the first touch position to the second touch position to reposition the menu at a second screen position;
determining whether one menu item of the plurality of menu items lies at the first location; and
highlighting the one menu item from the plurality of menu items based on a result of said determining.

10. The non-transitory computer readable medium according to Claim 9, wherein in the step of displaying of the menu, the first screen position of the menu is located such that the first location of the first touch information is within a surface area of a menu item of the plurality of menu items, the method further comprising:
highlighting the menu item from the plurality of menu items.

11. The non-transitory computer readable medium according to Claim 9 further comprising:
detecting that a touch that generates the second touch information has been released; and
executing a function that is associated with the highlighted menu item.

12. The non-transitory computer readable medium according to Claim 9 further comprising:
detecting that a touch that generates at least one of the first and the second touch information has been released; and
removing a display of the menu.
